# DEMANDE DE BREVET EUROPEEN

(11) **EP 1 310 342 A1**
(43) Date de publication de la demande: **14.05.2003**
(21) Numéro de dépôt: 02370047.9
(22) Date de dépôt: 31.10.2002
(51) Int. Cl.: B29C 41/18, B29C 41/50

(54) **Installation de moulage par embouage**

(30) Priorité: 08.11.2001 FR 0114498
(71) Demandeur: S.M.C.A., SARL, 62920 Chocques (FR)
(72) Inventeur: Risbourg, Arnaud-Arsène, 62400 Bethune (FR); Desbonnets, François-Lucien-Paul, 59500 Douai (FR)
(74) Mandataire: Hénnion, Jean-Claude

(57) **Abrégé**

L'invention se rapporte à une installation (1) de moulage comprenant à un poste de prise de poudre :
- une coquille (5) de moulage accouplée à un bac (8) à poudre, et
- des moyens de réduction de la production de fumées.

Cette installation est caractérisée en ce qu'elle comprend des moyens de modification de l'environnement de la poudre par injection d'un gaz.

## Description

L'invention se rapporte à une installation de moulage.

Pour mouler des pièces plastiques, il existe de nombreux procédés dont le choix dépend notamment du produit à obtenir.

Pour le moulage de pièces minces ou de peaux destinées à recouvrir notamment les tableaux de bord des véhicules, on utilise un procédé de moulage par embouage encore dit «slush moulding».

Ce procédé de moulage, vu de manière simpliste, consiste à déposer sur une coquille chaude de la poudre plastique qui, au contact de la surface chaude de la coquille, va fondre et recouvrir celle-ci.

L'ensemble est ensuite refroidi avant le démoulage pour retirer, par exemple, la peau qui sera fixée ultérieurement sur une coque plastique rigide, telle un tableau de bord d'un véhicule automobile.

Ce procédé comprend donc au moins quatre étapes successives :
- une étape de mise en température de la coquille,
- une étape de dépose de la matière sur la surface chaude de la coquille,
- une étape de refroidissement et
- une étape de démoulage.

Lors de la première étape, on introduit la coquille dans un four et on amène cette coquille à la température requise.

Ensuite, cette coquille chauffée est amenée à un poste de dépose de la poudre.

Pour cela, la coquille est accouplée à un bac contenant de la matière en poudre et, lorsque la coquille et le bac sont accouplés, on fait tourner l'ensemble autour d'un axe pour obtenir une répartition de la matière.

La rotation peut se faire sur 360° ou à la manière d'un pendule.

La coquille est ensuite désaccouplée du bac pour un refroidissement de la pièce plastique obtenue et démoulage ensuite.

Classiquement, une installation comprend un poste de prise de poudre où un moule et un bac à poudre sont accouplés et mis en rotation.

Pour la mise en oeuvre de ce procédé, il est connu de faire appel à une installation comportant un carrousel présentant autant de bras que d'étapes du procédé, chaque bras présentant à son extrémité une coquille et, répartis autour de ce carrousel, les moyens complémentaires tels le four etc ....

L'utilisation d'un carrousel permet de travailler en temps masqué et donc d'améliorer le rendement.

Les temps d'immobilisation à chaque poste étant différents et/ou notamment l'opération de chauffage étant plus lente que les autres, pour optimiser l'utilisation du four, on a déjà pensé à le partager entre deux installations de rotomoulage (FR-A-2.595.975) comprenant donc deux carrousels dont les trajectoires se rejoignent au poste de mise en température.

Le four est ainsi partagé entre deux outils de production mais il n'y a pas interaction entre les outils portés par un carrousel et les outils portés par l'autre carrousel.

On connaît, également, une installation (EP-A-208.432) comprenant un carrousel, dit principal, comportant un nombre prédéterminé de coquilles et au niveau du poste de prise de la matière, est prévu un second carrousel portant une pluralité de bacs, chacun contenant une matière de couleur différente de celle des autres bacs.

Lorsqu'une coquille se présente au poste de prise de matière, en fonction de la couleur désirée, on amène le bac de la couleur correspondante que l'on accouple à la coquille et ce, à l'aide d'un chariot qui se déplace selon une direction radiale au carrousel.

Dans un tel procédé, la qualité des pièces réalisées dépend des nombreux paramètres que l'installation précitée ne peut maîtriser sans perfectionnements substantiels.

On connaît une installation de moulage (EP-A-1.013.388) de pièces minces comprenant :
- un carrousel dit carrousel principal d'axe de rotation vertical comprenant lui-même un nombre prédéterminé de bras radiaux mobiles en rotation autour de leur axe longitudinal et portant à l'extrémité libre une coquille de moulage,
- un carrousel dit carrousel secondaire d'axe de rotation vertical comprenant au moins deux bacs à poudre disposés radialement,
- à un poste dit de prise de poudre, un moyen pour, d'une part, transférer le bac à poudre depuis le carrousel secondaire vers une coquille de moulage et, d'autre part, l'accoupler à celle-ci et vice versa,
- des moyens pour entraîner en rotation la coquille alors accouplée au bac à poudre comprenant en outre un moyen de centrage situé à l'opposé du bras porteur de la coquille qui, coopérant au moins pendant le temps de rotation, avec l'ensemble précité constitue, avec le bras portant l'ensemble coquille/bac, un axe horizontal de rotation stabilisée.

Cette solution technique, pour une installation de « slush moulding », est très intéressante car elle permet de travailler en temps masqué et la présence de ce moyen de centrage permet de stabiliser la coquille pendant sa rotation pour obtenir des produits finis de grande qualité.

Sur ces installations ainsi que d'autres, on constate, malheureusement des dégagements importants de fumées liés à l'échauffement des poudres.

Ces fumées sont gênantes pour le personnel mais, également, étant corrosives, elles réduisent la durée de vie des matériels.

Pour réduire la production de fumée, on connaît des installations (JP.2001-300952 ou JP.2000-254930) dans lesquelles on réalise une extraction partielle de l'air contenu dans le volume de l'ensemble constitué par le moule et le bac à poudre.

Une telle solution peut sembler intéressante mais est difficile à mettre en oeuvre, notamment, sur le plan de l'étanchéité.

L'invention se propose de remédier à ces inconvénients.

A cet effet, l'invention a pour objet une installation de moulage du type précité comprenant à un poste de prise de poudre :
- une coquille de moulage accouplée à un bac à poudre, et
- des moyens de réduction de la production de fumées, cette installation étant caractérisée en ce qu'elle comprend des moyens de modification de l'environnement de la poudre par injection d'un gaz.

L'invention sera bien comprise à l'aide de la description ci-après faite à titre d'exemple non limitatif et en regard du dessin qui représente schématiquement :

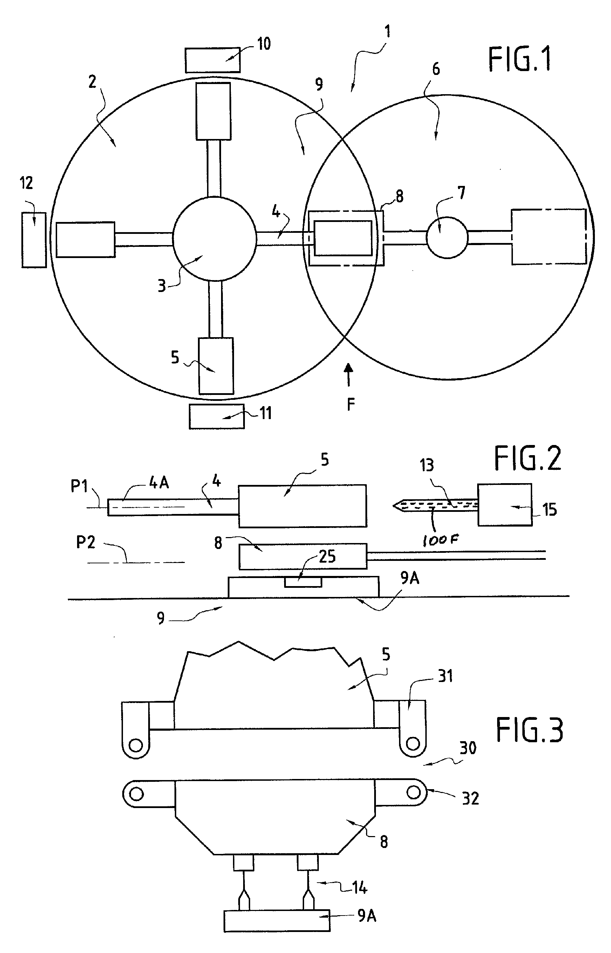

- figure 1 : une installation de moulage,
- figure 2 : une vue selon F de la figure 1,

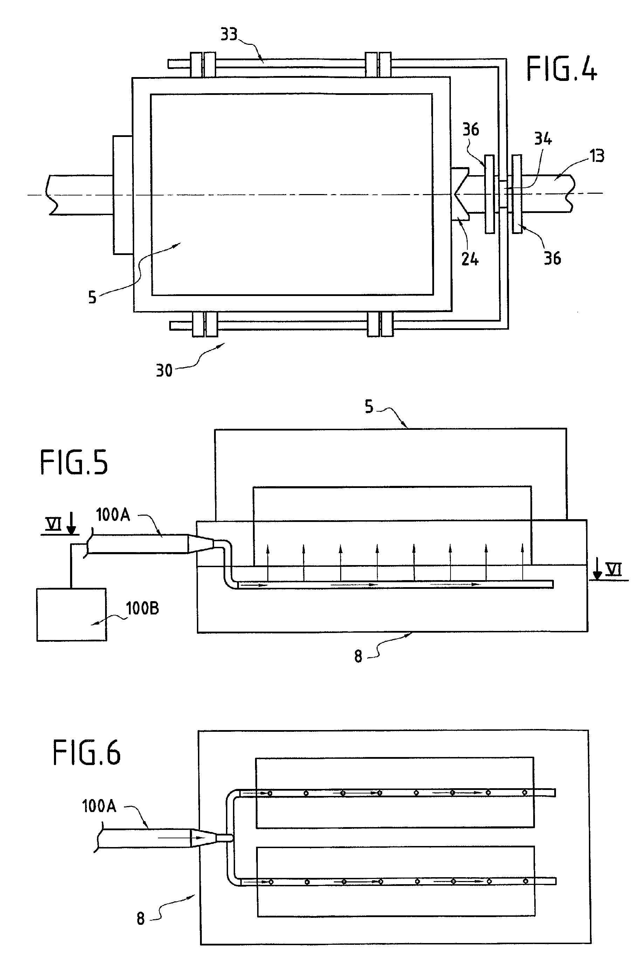

- figures 3 et 4 : des détails de réalisation,
- figure 5 : un détail de l'installation,
- figure 6 : une coupe selon VI-VI de la figure 5,
- figure 7 : un autre détail de l'installation,
- figure 8 : une variante du poste de prise de poudre,
- figures 9 et 10 : une variante de la figure 7 vue selon deux directions différentes.

En se reportant au dessin, on voit que, pour produire un pièce moulée notamment selon un procédé consistant à faire fondre une matière en poudre sur une coquille, on utilise une installation 1 comprenant :
- un carrousel 2 dit carrousel principal d'axe 3 de rotation vertical comprenant lui- même un nombre prédéterminé de bras 4 radiaux mobiles en rotation autour de leur axe 4A longitudinal et portant, à leur extrémité libre, une coquille 5 de moulage,
- un carrousel 6 dit carrousel secondaire d'axe 7 de rotation vertical comprenant au moins deux bacs 8 à poudre disposés radialement,
- à un poste dit de prise de poudre, un moyen 9 pour, d'une part, transférer le bac 8 à poudre depuis le carrousel secondaire vers une coquille de moulage et, d'autre part, l'accoupler à celle-ci et vice versa ,
- des moyens pour lors entraîner la coquille accouplée au bac à poudre en rotation autour d'un axe.

Cette installation comprend, outre, répartis autour du carrousel principal :
- un poste 10 de mise en température de chaque coquille,
- un poste 11 de refroidissement et
- un poste 12 de démoulage.

Bien entendu, on peut prévoir d'autres postes pour des opérations intermédiaires et par exemple après le poste de prise de poudre un poste de gélification qui termine le processus de transformation de la poudre en une pièce homogène.

De préférence, le carrousel 2 principal comportera au moins autant de bras munis à leur extrémité d'une coquille que de postes répartis autour du carrousel.

Les bacs 8 à poudre contiennent une quantité de poudre largement supérieure à celle nécessaire pour la réalisation d'une pièce.

Seule adhère à la paroi de la coquille une couche superficielle, le reste retournant dans le bac à poudre pour les pièces suivantes.

A ce poste de prise de la poudre, s'effectue la mise en contact de la poudre avec la coquille chauffée et une mise en rotation de l'ensemble coquille avec son bac accouplé pour une répartition correcte de la poudre sur la coquille.

Pendant cette opération, la poudre en contact avec la coquille fond pour former une peau.

En règle générale, on désaccouple la coquille du bac à poudre et on amène la coquille recouverte de la peau vers un poste de gélification qui est constitué d'un four où s'achève la transformation de la poudre.

Sur cette installation :
- les coquilles 5 se déplacent en rotation dans un plan P1 situé à un niveau supérieur au plan P2 dans lequel se déplacent les bacs 8 à poudre,
- au poste de prise de poudre, les trajectoires des coquilles et des bacs se superposent, le bac à poudre se situant alors sous la coquille et
- au poste de prise de poudre, l'installation comprend :
   . d'une part, à l'aplomb de l'ensemble coquille et bac immobilisé l'un au dessus de l'autre, des moyens 9A dits de levage pour saisir le bac à poudre et le transférer vers la coquille par un déplacement essentiellement vertical et
   . d'autre part, l'installation comprend dans le plan médian à l'axe de rotation de l'ensemble coquille et bac accouplés, une contre-pointe 13 de centrage qui coopère, au moins pendant le temps de rotation, avec l'ensemble précité pour constituer avec le bras portant l'ensemble coquille/bac un axe horizontal de rotation stabilisée.

Avantageusement, le moyen de levage 9A est une table élévatrice.

Le moyen de levage et le bac comprennent des moyens 14 complémentaires de positionnement d'un élément l'un par rapport à l'autre.

Par exemple, on utilise des cônes de centrage.

Le bac est, par exemple, simplement posé sur un cadre porté par le carrousel.

De préférence, le moyen 9A de levage comprend un dispositif 25 de pesée du bac à poudre de manière à connaître, très précisément, la matière consommée à chaque prise de poudre :
- d'une part, pour un suivi des pièces et
- d'autre part, pour effectuer, après un nombre de cycles prédéterminés, un rechargement du bac à poudre correspondant effectivement à la quantité consommée.

A un poste dit de rechargement, on peut prévoir un troisième carrousel permettant d'amener la matière.

La contre-pointe est montée libre en rotation autour de son axe longitudinal.

Cette contre-pointe 13 vient en appui dans une empreinte 24 que présente au moins indirectement la coquille et un moyen 15 de déplacement de la contre-pointe selon son axe longitudinal permettant d'engager et de désengager la contre pointe de l'empreinte.

De préférence, ce moyen de déplacement engage la contre pointe avec l'empreinte avant que le moyen de levage vienne accoupler le bac sur la coquille.

Cela permet de venir accoupler le bac sans crainte de fausser le bras portant la coquille.

Généralement, la coquille est amovible et, à cet effet, elle est portée par un cadre.

Le bac est également porté par un cadre rigide.

L'ensemble coquille et bac comprend des moyens 30 de verrouillage, l'une sur l'autre, des pièces précitées.

Ces moyens 30 de verrouillage sont des moyens de verrouillage rapide.

Par exemple, pour ce verrouillage, les moyens comprennent des pattes 31 portées par le cadre et au moins indirectement par la coquille et ces pattes présentent chacune un oeil 32 ou canon, lesquels yeux ou canon sont alignés deux à deux pour permettre le passage d'une tige 33 de verrouillage.

Ces pattes sont présentées au moins indirectement par deux cotés parallèles de la coquille et par deux cotés parallèles du bac.

L'ensemble de verrouillage comprend donc des pièces fixes et des pièces mobiles.

De préférence, les pièces mobiles sont portées soit par le bac à poudre, soit par le moyen de levage de manière à ne pas subir la chaleur du four.

Dans une forme de réalisation, c'est au moins indirectement le déplacement de la contre-pointe qui verrouille et déverrouille le bac sur la coquille.

Par exemple, les tiges de verrouillage sont associées à un doigt 34 qui vient en prise indirectement avec la contre-pointe.

Par exemple, celle-ci présente radialement deux disques 36 délimitant une gorge circulaire dans laquelle s'insère le doigt précité.

D'autres modes de réalisation sont bien entendu possibles.

Avantageusement, chaque coquille portera au moins un capteur de température pour optimiser le temps de séjour de la coquille dans le four.

L'installation comprend des moyens 100, 200 de réduction de la production de fumées par action sur la composition gazeuse d'au moins l'environnement de la poudre au poste prise de la poudre.

Dans une première forme de réalisation, l'installation comprend des moyens 100A de communication d'un fluide entre le volume délimité par la coquille accouplée avec le bac à poudre et une réserve 100B contenant un gaz inerte en vue de modifier l'environnement gazeux du volume précité en y introduisant un gaz inerte.

Cette opération d'introduction d'un gaz, notamment, inerte au regard de la poudre consiste à remplacer l'air existant favorable à l'oxydation par un gaz réduisant cette oxydation, tel de l'azote.

Dans une deuxième forme de réalisation, l'installation comprend des moyens de communication de fluides entre le volume délimité par la coquille accouplée avec le bac à poudre en vue de modifier l'environnement gazeux du volume précité en y supprimant partiellement l'air environnant et en le remplaçant par un autre gaz.

Pour ce faire, le moyen de centrage 13, 13A de l'ensemble coquille bac à poudre loge une conduite axiale 100F.

L'avantage de cette solution est qu'elle est très simple à mettre en oeuvre et permet même pendant la rotation de maintenir une pression de gaz dans l'ensemble moule/bac à poudre et donc de ne pas tenir compte des problèmes d'étanchéité.

On comprend que, suivant le type de poudre, on pourra injecter le type de gaz qui sera favorable à la transformation de la poudre.

De préférence, au lieu d'utiliser une contre-pointe 13, on utilise un moyen équivalent 13A connu sous le terme de lunette.

Cette lunette 13A est constituée par une pièce mâle 13B qui se positionne au centre d'un ensemble de galets 13C qui, mobiles en rotation autour d'un axe, s'appuient sur la périphérie de la pièce mâle.

Cette pièce mâle 13B est cylindrique de révolution, soit à section constante, soit à section variable de sorte de former un cône.

Cette dernière solution permet de recentrer la coquille lorsqu'il y a pénétration du cône dans l'ensemble de rouleau.

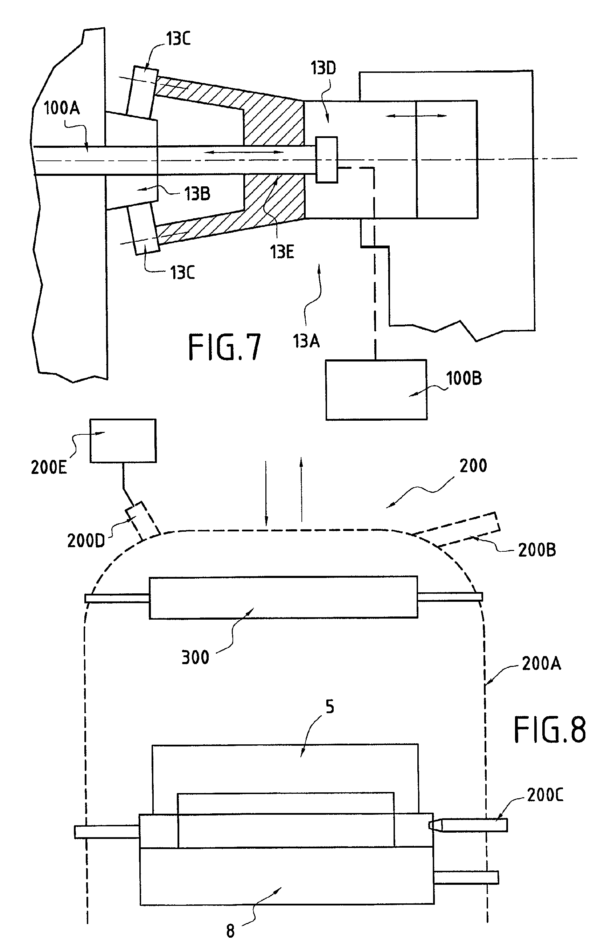

On a représenté en figure 7, cette solution où les rouleaux sont portés par un arbre 13D mobile.

Cet arbre mobile loge un connecteur 13E mobile qui se raccorde à la conduite présentée par la coquille ou le bac à poudre.

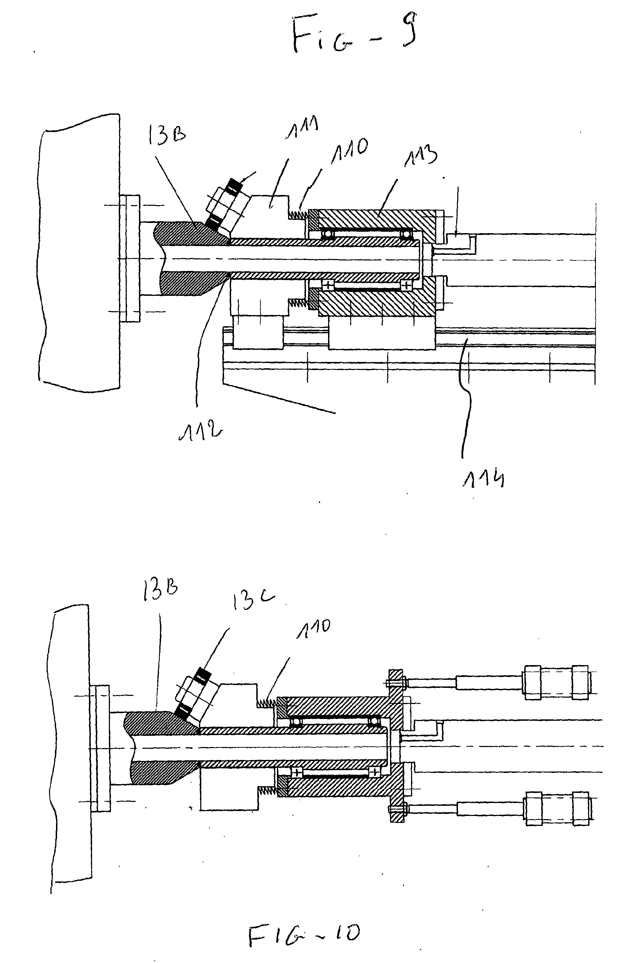

La figure 9 montre une variante de cette connexion.

Des éléments ressorts 110 permettent d'appliquer la tête 111 sur l'extrémité conique portée par le moule ou cadre porte-moule.

Un joint torique 112 réalise l'étanchéité.

On notera que la tête 111 est guidée en rotation dans une chemise 113 au moyen de roulements.

Cette chemise est déplaçable à l'aide de vérins

Des guides 114 guident en translation cette tête et cette chemise.

Une alimentation en gaz au travers d'un raccord tournant peut ainsi être réalisée.

Comme on peut voir, le fluide traverse une conduite 100A présente dans le cadre qui se prolonge dans le bac à poudre et alimente deux conduites parallèles qui débouchent à l'intérieur du volume défini préalablement.

C'est un point qui est très favorable.

Au lieu d'une alimentation en gaz au travers du moyen de centrage, on peut prévoir un autre moyen de connexion mais qui nécessite de supprimer la connexion le temps de rotation.

Comme indiqué plus haut, lors de l'injection du gaz, on peut en même temps évacuer l'air contenu ou le neutraliser.

Dans une seconde forme de réalisation, en complément ou en remplacement des dispositions techniques précédentes, l'installation comprend une cloche 200A mobile verticalement venant coiffer l'ensemble constitué par la coquille et le bac à poudre.

Accouplée, cette cloche mobile est pourvue de moyens d'injection 200B d'un gaz, notamment, inerte en vue de constituer à l'intérieur de la cloche un ciel gazeux.

Par ciel gazeux, on comprendra un volume emprisonné contenant un mélange gaz inerte avec de l'air mais de façon telle que la proportion de gaz inerte reste majoritaire.

Pour la mise en place de la cloche 200A, sont bien évidemment prévues des découpes 200C pour le passage des bras des carrousels lors de la descente de la cloche.

Avantageusement, la cloche comprend des moyens 200D d'évacuation de la fumée qui pourraient s'y produire et des moyens 200E de traitement de cette fumée.

Dans une forme avantageuse de réalisation de cette installation, la cloche loge un moyen 300 de production de chaleur situé au dessus de la coquille pour procéder dans la dite cloche à une étape de gélification sous atmosphère contrôlée.

Ainsi, après rotation de l'ensemble coquille - bac à poudre, on retire le bac à poudre et on fait pivoter la coquille d'un demi tour de sorte que la face interne de la coquille se trouve face au moyen de production de chaleur pour achever le processus de transformation des poudres.

Le moyen de production de chaleur est par exemple un plateau chauffant électrique à infra rouge.

Avantageusement, s'il existe un poste de gélification après le poste de prise de poudre, ce poste de gélification comprend une cloche du type précité et logera éventuellement le moyen de production de la chaleur précité.

## Revendications

1. Installation (1) de moulage comprenant à un poste de prise de poudre :
- une coquille (5) de moulage accouplée à un bac (8) à poudre, et
- des moyens (100, 200) de réduction de la production de fumées,
cette installation étant **CARACTERISEE en ce qu'**elle comprend des moyens de modification de l'environnement de la poudre par injection d'un gaz.

2. Installation selon la revendication 1 **caractérisée en ce qu'**elle comprend des moyens (100A) de communication d'un fluide entre le volume délimité par la coquille accouplée avec le bac à poudre et une réserve (100B) contenant un gaz.

3. Installation selon la revendication 1 **caractérisée en ce qu'**elle comprend un moyen de centrage (13, 13A) de l'ensemble coquille/bac à poudre, lequel loge une conduite axiale (100F) d'introduction d'un gaz.

4. Installation selon la revendication 3 **caractérisée en ce que** le moyen (13A) de centrage est connu sous le terme de lunette.

5. Installation selon la revendication 3 **caractérisée en ce que** le moyen (13A) de centrage est une contre-pointe logeant la conduite axiale.

6. Installation selon la revendication 1 **caractérisée en ce qu'**elle comprend une cloche (200A) mobile verticalement venant coiffer l'ensemble constitué par la coquille et le bac à poudre, cette cloche étant pourvue de moyens d'injection (200B) d'un gaz en vue de constituer à l'intérieur de la cloche un ciel gazeux.

7. Installation selon la revendication 6 **caractérisée en ce que** des découpes (200C) sont prévues dans la cloche pour le passage d'un bras portant le moule accouplé au bac.

8. Installation selon la revendication 6 **caractérisée en ce que** la cloche comprend des moyens (200D) d'évacuation de la fumée et des moyens (200E) de traitement de cette fumée.

9. Installation selon la revendication 6 **caractérisée en ce que** la cloche loge un moyen (300) de production de chaleur situé au dessus de la coquille pour procéder dans la dite cloche à une étape de gélification sous atmosphère contrôlée.

10. Installation selon les revendications 6 à 8 **caractérisée en ce qu'**elle comprend un poste de gélification comprenant une cloche.
